# EUROPEAN PATENT APPLICATION

(11) **EP 4 711 961 A1**
(43) Date of publication of application: **18.03.2026**
(21) Application number: 25200266.2
(22) Date of filing: 04.09.2025
(51) Int. Cl.: G06F 21/55, H04L 9/40

(54) **WEBPAGE SECURITY MONITORING**

(30) Priority: 13.09.2024 US 202463694539 P
(71) Applicant: SecurityMetrics, Inc., Orem, Utah 84057 (US)
(72) Inventor: Horton, Chad, Orem (US); Willis, Aaron, Orem (US)
(74) Representative: Casalonga

(57) **Abstract**

A method to control a remote browser may include executing a webpage by a web browser on a system and capturing, by the system, an image of the webpage. The method may further include directing the image of the webpage to a device for presentation of the image and after directing the image of the webpage to the device, obtaining, at the system, image interaction data from the device. In some embodiments, the image interaction data may represent a user interaction with the image of the webpage. The method may also include in response to obtaining the image interaction data, applying, at the system via the web browser, an interaction to the webpage that corresponds to the user interaction using the image interaction data.

## Description

### FIELD

The embodiments discussed herein are related to monitoring webpage security.

### BACKGROUND

Financial transactions are occurring over the Internet at a rapidly expanding pace as more and more people purchase goods and services online. As a result, more and more companies are offering their goods and services online as well. As more business is conducted online, hackers and others are using more sophisticated techniques to obtain credit card and other financial data of customers of online merchants.

The subject matter claimed herein is not limited to embodiments that solve any disadvantages or that operate only in environments such as those described above. Rather, this background is only provided to illustrate one example technology area where some embodiments described herein may be practiced.

### SUMMARY

A method to control a remote browser may include executing a webpage by a web browser on a system and capturing, by the system, an image of the webpage. The method may further include directing the image of the webpage to a device for presentation of the image and after directing the image of the webpage to the device, obtaining, at the system, image interaction data from the device. In some embodiments, the image interaction data may represent a user interaction with the image of the webpage. The method may also include in response to obtaining the image interaction data, applying, at the system via the web browser, an interaction to the webpage that corresponds to the user interaction using the image interaction data.

### BRIEF DESCRIPTION OF THE DRAWINGS

Example embodiments will be described and explained with additional specificity and detail through the use of the accompanying drawings in which:
FIG. 1 illustrates an example environment to control a remote browser;
FIG. 2 illustrate example operations to control a remote browser;
FIG. 3 illustrates an example method of controlling a remote browser;
FIG. 4 illustrates an example environment to monitor webpage security;
FIG. 5 illustrates webpage navigation;
FIGS. 6A and 6B illustrates a webpage with inline frames embedded;
FIG. 7 illustrates an example method of webpage analysis;
FIG. 8 illustrates another example method of webpage analysis;
FIG. 9 illustrates another example method of webpage analysis; and
FIG. 10 illustrates an example system that may be used to perform operations.

### DESCRIPTION OF EMBODIMENTS

Some embodiments in this disclosure relate to systems and methods that may be configured to monitor security of webpages, which may include monitoring the structural integrity/security of the webpages. In some instances, the security of webpages may be compromised by third parties, for example, by altering the source code or remotely called code of a webpage. The source code or remotely called code of webpages may be altered by the addition of extra code. The extra code may be configured to cause a browser rendering the webpage to direct data entered into the webpages to unauthorized third parties, such that the third parties steal or capture the data. The data may include financial information, such as a credit card or a bank account number, personal information, such as a social security number or driver license number, among other data. The additional code may not otherwise affect the operability of the webpage such that a user of the webpage or the owner of the webpage may be unaware that the security of the webpage is compromised.

The systems and methods described in this disclosure set forth a technical solution to a technological problem with respect to webpage security. The technological problem outlined herein regarding the identification of security issues did not exist before computer technology and is directly related to computer technology. The systems and methods described in this disclosure set forth a technical solution to the technical problem that requires implementation by a computer or computer system. Alternately or additionally, the systems and methods described in this disclosure may solve other technological problems and provide other technical solutions.

Furthermore, the systems and methods described in this disclosure are at least in the technological field of Internet security, in particular the technological field with respect to website security. The systems and methods described in this disclosure may be relevant and useful in other technological fields as well.

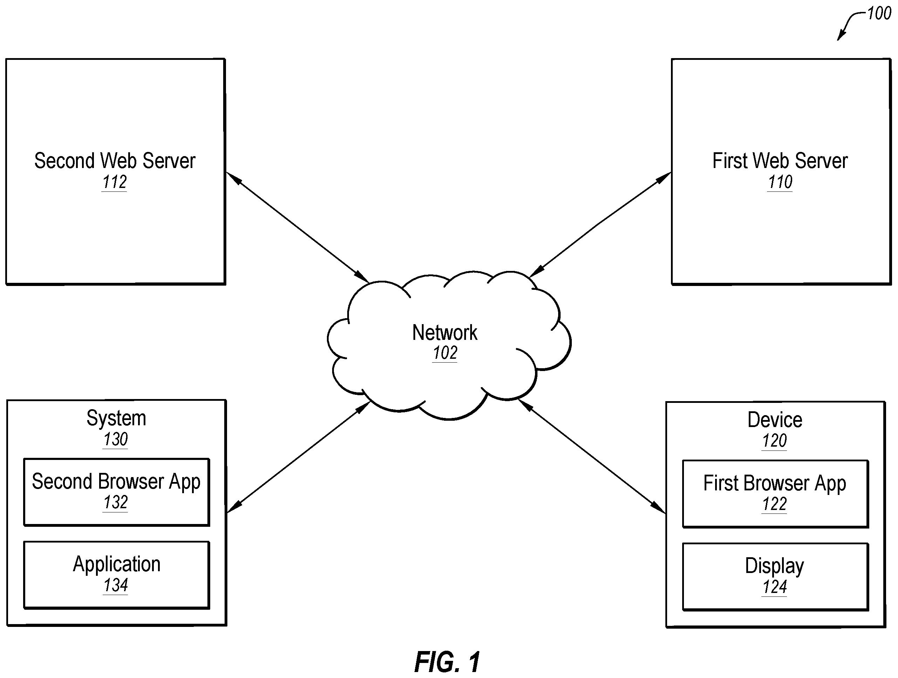

Turning to the figures, FIG. 1 illustrates an example environment 100 to control a remote browser. The environment 100 may be arranged in accordance with at least one embodiment described in the present disclosure. The environment 100 may include a network 102, a first webserver 110, a second webserver 112, a device 120, and a system 130.

The network 102 may be configured to communicatively couple the first webserver 110, the second webserver 112, the device 120, and the system 130. In some embodiments, the network 102 may be any network or configuration of networks configured to send and receive communications between systems and devices. In some embodiments, the network 102 may include a wired network, an optical network, and/or a wireless network, and may have numerous different configurations. The network 102 may include one or more devices configured to allow communication between the first webserver 110, the second webserver 112, the device 120, and the system 130.

The first webserver 110 may include at least memory and a processor. The memory may include instructions that when executed by the processor may cause or direct the first webserver 110 to perform operations as described in this disclosure, among other operations. The first webserver 110 may be configured to host one or more webpages of a website by storing source code of the webpages.

The second webserver 112 may include at least memory and a processor. The memory may include instructions that when executed by the processor may cause or direct the second webserver 112 to perform operations as described in this disclosure, among other operations. The second webserver 112 may be configured to host one or more webpages of a website by storing source code of the webpages.

In some embodiments, the first webserver 110 and the second webserver 112 may be configured to receive requests for webpages from outside sources. For example, browser applications on devices, such as a browser application on the device 120, may send a request to a URL of the first webserver 110 to request a webpage. The first webserver 110 may fulfill the request by sending the source code of the webpage to the requesting device.

Note that in some embodiments, the source code of the webpage may include one or more links to remotely called code that is not part of the source code of the webpage. In some embodiments, the remotely called code may not be provided by the first webserver 110 in response to an initial request from a device, such as the device 120, for the source code of the webpage. Alternately or additionally, in response to an initial request from a device, the first webserver 110 may obtain the remotely called code and may provide the remotely called code with the source code to the requesting device, such as the device 120. Furthermore, the first webserver 110 and the second webserver 112 may be configured to monitor the integrity of the source code on the first webserver 110 and the second webserver 112.

The device 120 may be any electronic or digital computing device. For example, the device 120 may include a desktop computer, a server, networked computers, a laptop computer, a smartphone, a mobile phone, a tablet computer, smart watch or other smart wearable, or any other computing device that may be used to access a webpage. In some embodiments, the device 120 may include memory and at least one processor. In these and other embodiments, the memory may include computer-readable instructions that are configured to be executed by the processor to cause or direct the device 120 to perform operations described in this disclosure.

The device 120 may include a first browser application 122 that may be configured to perform actions with respect to requesting and render webpages. In these and other embodiments, the first browser application 122 may be configured to receive instructions from a user and in response to the instructions from the user, request and render webpages.

The system 130 may include at least memory and a processor. The memory may include instructions that, when executed by the processor, may cause or direct the system 130 to perform operations as described in this disclosure, among other operations. The system 130 may include a second browser application 132 that may be configured to perform actions with respect to requesting and render webpages. In these and other embodiments, the second browser application 132 may be configured to receive instructions from a user and in response to the instructions from the user, request and render webpages.

In some embodiments, the device 120 may be configured to interact with a user to allow the user to remotely access and remotely interact with a website hosted by the second webserver 112 via the system 130. In these and other embodiments, the device 120 may include an application that may be configured to allow the user to remotely access and remotely interact with the website. Alternately or additionally, a remote-control website hosted by the first webserver 110 may be configured to allow the user to remotely access and remotely interact with the website. In these and other embodiments, the device 120 may include a first browser application 122. In these and other embodiments, a user may access the remote-control website using the first browser application 122. The remote-control website may provide functionality to allow the user to remotely access and remotely interact with the website hosted by the second webserver 112.

The following description of FIG. 1 is provided based on the device 120 including an application that may be configured to allow the user to remotely access and remotely interact with the website. Similar functionality and features may be provided via the remote-control website that is executed by the first browser application 122 of the device 120.

In some embodiments, to allow the user to interact with the website, a field may be provided for a user to input a web address for the website. In response to obtaining the web address, a request may be sent to the system 130 with the web address and a direction to access the website. The system 130 may obtain the request and use a second browser application 132 to access the website. For example, the second browser application 132 may request the second webserver 112 for source code to the website. In these and other embodiments, the second browser application 132 may render the website using the source code from the second webserver 112.

In some embodiments, the system 130 may include an application 134 configured to interface with the second browser application 132 to allow the user to remotely interact with the website. The application 134 may be configured to capture images of a current rendering of the website and to apply interactions to the website. In these and other embodiments, the application 134 may capture the images of a current rendering of the website and direct the images to the device 120. The device 120 may obtain the images and may present the images via the first browser application 122, for example on a display 124. As a result, a user of the device 120 may view a current rendering of the website that is being rendered by the second browser application 132 on the system 130.

In some embodiments, the device 120 may be further configured to capture user interactions with the image of the website displayed by the device 120. For example, the image of the website may display one or more interactive elements. The image may be displayed such as the website would be displayed if the first browser application 122 was rendering the website. In these and other embodiments, a user may interact with the device 120 to cause a cursor to navigate to different locations within the image and/or to interact with the one or more interactive elements. Thus, device 120 may allow the user to interact with the image of the website as if the device 120 was rendering the website via the first browser application 122. For example, a user may click on an interactive element that is illustrated in the image. The clicking of the interactive element may not directly cause an interaction with the website as the clicking occurs solely on the device 120 in view of the image. However, in these and other embodiments, the device 120 may capture the user interactions. For example, the device 120 may capture movement of the cursor, key strokes, and/or interactions with elements of the website as illustrated in the image. The device 120 may provide the user interactions to the system 130 as image interaction data. The application 134 may be configured to obtain the image interaction data and translate the image interaction data into interactions that may be applied to the website via the second browser application 132. In these and other embodiments, the application 134 may provide the interactions to the second browser application 132. The second browser application 132 may accept the interactions as if the interactions were user interactions with the website if the user were interacting directly with the system 130. The second browser application 132 may apply the interactions to the website.

In some embodiments, the system 130 may be configured to capture images of the website after each interaction, after some number of interactions, after some time period, at random intervals, or some combination of user interactions and time periods. For example, an image may be captured every two seconds unless an interaction occurs before the two seconds in which case the image may be captured after the website updates from the interaction.

In these and other embodiments, after capturing an image, the system 130 may provide the image to the device 120 for presentation of the image on the display for the user. In these and other embodiments, images and image interaction data may be shared between the system 130 and the device 120 in real time to allow a user of the device 120 to remotely access and interact with the website while the website is rendered by the system 130. For example, the sharing of images and image interaction data between the system 130 and the device 120 may allow a user to navigate through a website, enter data, and utilize services provided by the website. For example, a user may be able to navigate from a first webpage of the website, such as a landing webpage, to a product page. On the product page, the user may select a product, access a shopping cart page, and purchase the product using the device 120 without ever interacting directly with the system 130.

As other examples, using the environment 100, the system 130 and the device 120 may be separated by a firewall or some other network that limits interaction for certain websites. For example, the device 120 may be in a location that restrictions access to websites. The device 120 may use the system 130 to access a banned website. Because the traffic between the device 120 and the system 130 may not appear as proxy traffic, the traffic may not be restricted and a user of the device 120 may access the banned website.

As another example, using the environment 100, the system 130 and the device 120 may be separated. For example, the system 130 may be in an isolated sandbox. When a user of the device 120 access a malicious or unsecured website, the system 130 may be interfacing with the website and not the device 120. As such, the device 120 may not be corrupted and the system 130 in the sandbox may be deleted after the interaction to eliminate any corruption that may occur.

As another example, using the environment 100, the system 130 and the device 120 may be separated via a firewall where a website is not publicly exposed but only accessible behind the firewall where the system 130 resides. In these and other embodiments, the device 120 may access the website via the system 130. As a result, those remote to the firewall may still access webpages behind the firewall without virtual private network or other configurations.

In some embodiments, the application 134 may be configured to record the image interaction data. In these and other embodiments, the recording of the image interaction data may allow the application 134 to direct the second browser application 132 to request source code of the website from the second webserver 112 and interact with the website in a similar manner as a user without a user interacting with the device 120. For example, the system 130 may use the image interaction data to cause the website to navigate through one or more pages to a desired webpage of the website, such as a shopping cart page, and perform a purchasing procedure on the website.

Modifications, additions, or omissions may be made to the environment 100 without departing from the scope of the present disclosure. For example, in some embodiments, the environment 100 may not include the first webserver 110. In these and other embodiments, the device 120 may not include the first browser application 122.

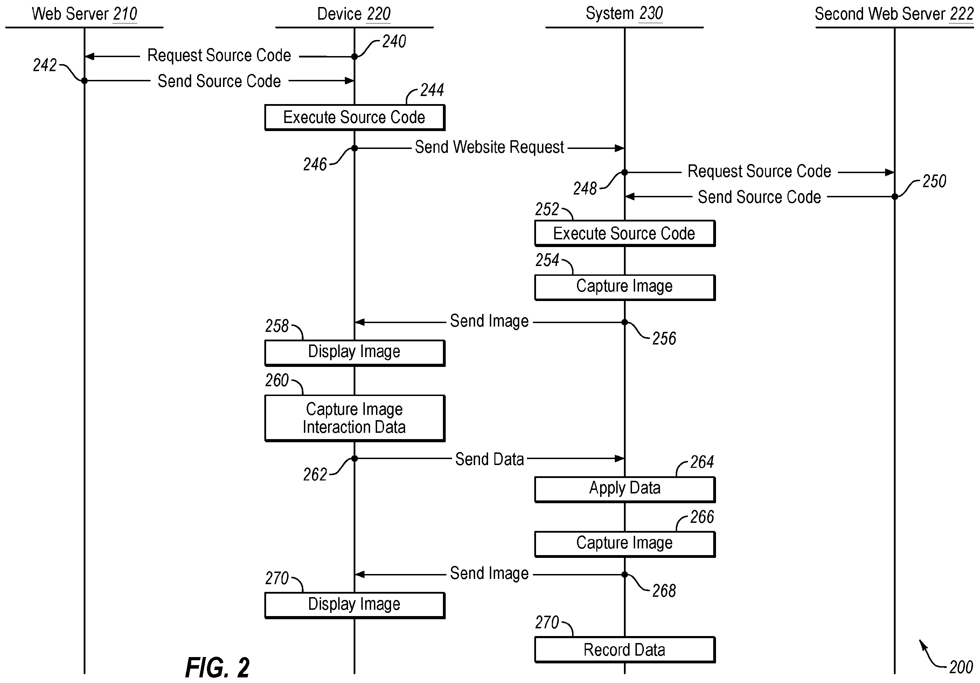

FIG. 2 illustrate example operations 200 to control a remote browser. The operations 200 may be arranged in accordance with at least one embodiment described in the present disclosure. The operations 200 may be between a first webserver 210, a second webserver 212, a device 220, and a system 230.

In some embodiments, the first webserver 210, the second webserver 212, the device 220, and the system 230 may be analogous to the first webserver 110, the second webserver 112, the device 120, and the system 130 of FIG. 1, respectively. Accordingly, no further explanation is provided with respect thereto. Alternately or additionally, the operations 200 may be an example of the operation of the elements of the environment of FIG. 1.

In some embodiments, the operations 200 may be an example of communications and interactions between the first webserver 210, the second webserver 212, the device 220, and the system 230. Generally, the operations 200 may relate to operating a remote browser. The interactions between the first webserver 210, the second webserver 212, the device 220, and the system 230 may occur over one or more networks. The operations 200 illustrated are not exhaustive but are merely representative of operations 200 that may occur. Furthermore, one operation as illustrated may represent one or more communications, operations, and/or data exchanges.

At operation 240, the device 220 may be configured to request source code of a first website. The first website may be configured to allow for remote operation of a web browser on the system 230 to access websites via the system 230. In some embodiments, the device 220 may request the source code in response to input from a user.

At operation 242, the first webserver 210 may send the source code requested by the device 220 to the device 220. The source code may include instructions that when executed by a web browser on the device 220 may allow a user to access a website via a web browser on the system 230. For example, a user may interact with the device 220 and indicate a website that the user desires to remotely access.

At operation 244, the device 220 may execute the source code from the first webserver 210. Execution of the source code may allow the device 220 to obtain input from the user regarding a website for remote access.

At operation 246, the device 220 may send a request to the system 230 for remote access to the website. At operation 248, in response to obtaining the request from the device 220, the system 230 may request the source code of the website from the second web server 222.

At operation 250, in response to receiving the request from the system 230, the second web server 222 may provide the source code of the website to the system 230.

At operation 252, the system 230 may execute the source code from the second web server 222 to render the website. For example, execution of the source code may result in the rendering of a first webpage of the website, such as a landing page of the website.

At operation 254, the system 230 may capture an image of the website. For example, the system 230 may capture an image of a landing page of the website. The image of the landing page may be a graphical representation of the landing page of the website. No source code or other elements of the image may be functional. Rather, the captured image may be solely an image, such as a jpeg, tiff, or other image that illustrates the look of the landing page but provides no functionality of the landing page.

At operation 256, the system 230 may provide the captured image to the device 220. The system 230 may also be configured to provide data about the image. For example, the data may include information regarding the render size of the webpage from which the image is captured.

At operation 258, the device 220 may present the image from the system 230. For example, the device 220 may present the image on a display of the device 220. The device 220 may present the image in a manner similar as if the device 220 was rendering the website.

At operation 260, the device 220 may be configured to capture image interaction data. The image interaction data may be how a user interacts with the device 220 with respect to the image. For example, the user may move a cursor over the image, provide character input, and/or perform a click event. A click event may be a single press and release of a mouse button, a two consecutive mouse clicks performed in rapid succession, or a right click of a mouse such as to trigger a contextual menu. Such click events when provided in a graphical user interface, such as a graphical user interface rendered by a web browser when displaying a web page, result in interaction with an element that is handled by code of the webpage to enable a specific action or function to be executed. The device 220 may not be rendering the webpage in a graphical user interface. As such, the device 220 merely records the user interactions and a location of the user interaction on the image. For example, the device 220 may record that a user performed a single click at pixel location (75, 75) in the displayed image. The click event and the location of the click event in the image may be included in the image interaction data.

At operation 262, the device 220 may send the image interaction data to the system 230. At operation 264, the system 230 may apply the image interaction data to the webpage being rendered by the system 230. For example, the system 230 may be configured to convert a pixel location in the image interaction data to a position on a rendering of the webpage. The system 230 may thus provide the web browser rendering the webpage an input that corresponds to the image interaction data and thus the user interaction that occurred with respect to the device 220. For example, the system 230 may indicate to the web browser that a single click occurred at a particular position of the webpage. The web browser may perform the function to be executed in response to the single click occurring at the particular position of the webpage. For example, the web browser may execute a function that may change a display on the webpage or may execute a navigation event resulting in a loading of another webpage.

At operation 266, the system 230 may capture another image of the website as rendered by the web browser of the application. For example, the other image may be captured after execution of one or more changes to the website resulting from the image interaction data. As such, the other image may be an updated view of the website after execution of the function results from the click event.

At operation 268, the system 230 may send the other image to the device 220. At operation 270, the device 220 may present the other image to allow a user to view the changes to the website.

In some embodiments, operations 254, 256, 258, 260, 262, 264, 266, 268, and 270 may repeat in the same or different order until the user instructs the device 220 to stop remote operation of the website. For example, the operations 254, 256, and 258 may be performed at a set interval regardless of user interaction with the image or the capture of image interaction data by the device 220. As another example, the image interaction data may only include movement of the cursor. In these and other embodiments, the image interaction data may be provided to the system 230, a location of the cursor may be updated, another image captured with the updated location of the cursor, and the image may be provided to the device 220. As such, the images viewed by the user may be analogous to how a user would view the website if the user were directly interaction with the device rendering the website.

In some embodiments, the operations 200 may include operation 272. At operation 272, the system 230 may record or store the image interaction data and/or the webpage interactions translated from the image interaction data. As such, the system 230 may be configured to access the source code from the second web server 222 without a request from the device 220 and recreate how a user navigated a website via clock events and/or other user interactions.

Modifications, additions, or omissions may be made to the operations 200 without departing from the scope of the present disclosure. For example, in some embodiments, the operations 200 may include one or more additional operations or fewer operations. For example, the operations 200 may not include operations 240, 242, and 244. In these and other embodiments, the device 220 may include an application to interact with the user and display images from the system 230.

In some embodiments, image interaction data may be used to monitor the security of webpages. To monitor the security of webpages, some web servers may implement software and processes to monitor the source code of the webpages while the source code is stored on the web servers. To monitor the source code, the web servers may use a file integrity monitoring (FIM) process. During a FIM process, monitoring tools on the web server may compare the current source code stored on the web server to a known version of the source code, referred to as known source code. However, monitoring the source code of the webpage at the web server does not provide an indication of security issue of the webpage with respect to altering of remotely called code used by devices to render the webpage.

Remotely called code as used in this disclosure may include code that is not included in the source code hosted and provided originally by a web server, but code to which a link is included in the source code. The link may be configured to allow a browser application parsing and/or executing the source code or a web server parsing the source code before sending the source code to browser to link to and obtain the remotely called code. The remotely called code may be hosted by the web server that hosts the source code or another server or device may host the remotely called code. For example, the link may include a uniform resource identifier that points to additional code that may be downloaded and parsed by the browser application. The remotely called code may include HTML code, Cascading Stylesheets, JavaScript, Flash, and ActionScript, among other types of code. The remotely called code may be configured to provide additional visual features, functionality, and/or other features of the webpage not defined by the source code of the webpage.

Because access to all the remotely called code may be difficult, the security of webpages may be monitored by monitoring the rendering of webpages. The rendering of the webpages, e.g., rendered code, may be performed by executing source code and remotely called code and includes the finalized instructions used by a browser to layout the presentation of the webpage on a device that requested the webpage from the web server. In some embodiments, the rendering of the website may include elements that are only represented in the rendered code and not represented in the source code and/or the remotely called code without parsing and/or execution of the source code and/or the remotely called code.

Different webpages of a website may include different requirements to be rendered. Rendering a landing webpage of a website may involve simply requesting source code of the landing webpage from a webserver and executing the source code and any corresponding remotely called. In contrast, other webpages of a website may be difficult to render. For example, a checkout page of a website requires navigation and click events to enter the checkout page. Thus, automatically being able to render the checkout page may be difficult when routine rendering of the landing webpage is desired.

In some embodiments, stored image interaction data that navigates to the inner webpages of a website may be used to render the inner webpages for monitoring security of the inner webpages. For example, a user may interact with an environment as described with respect to FIGS. 1 and/or 2 to navigate from a landing page of a website to a desired inner page of a website that includes a user data entry location, such as a checkout page, where a user may enter data such as personal or financial information. The webpage interactions used to direct the remote web browser to the landing page may be stored to allow for navigation to the landing page in the future. By navigating to the landing page, the generated rendered code may be captured and analyzed to monitor the security of the webpage.

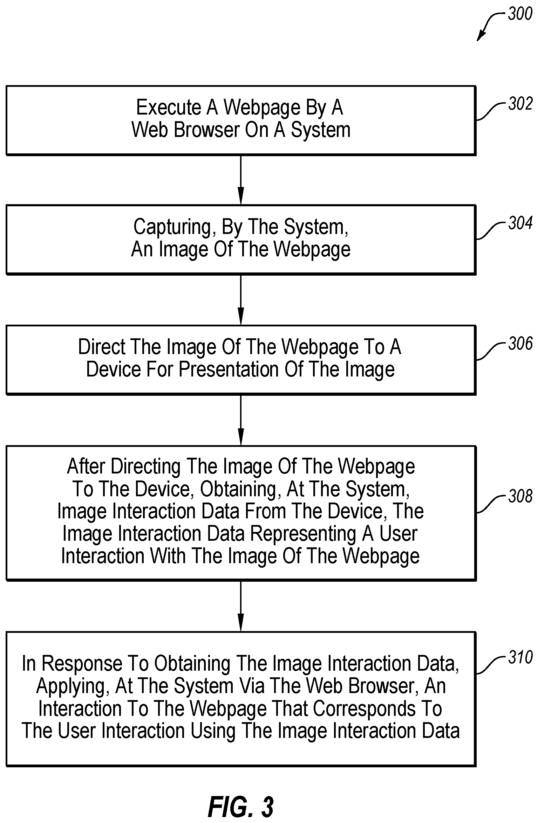

FIG. 3 illustrates a flowchart of an example method 300 to control a remote browser. The method 300 may be arranged in accordance with at least one embodiment described in the present disclosure. One or more operations of the method 300 may be performed, in some embodiments, by or using a device or system, such as the system 130 of FIG. 1, or another device or combination of devices/systems. Although illustrated as discrete blocks, various blocks may be divided into additional blocks, combined into fewer blocks, or eliminated, depending on the desired implementation.

The method 300 may begin with block 302, which may include executing a webpage by a web browser on a system. The web browser may be configured to render the webpage by processing source code and any remotely called code associated with the webpage. The system may include memory and at least one processor configured to execute the web browser application.

The method 300 may proceed to block 304, which may include capturing an image of the webpage by the system. The captured image may be a graphical representation of the rendered webpage. The image may include visual elements of the webpage without functional code elements. The image may be captured in a format such as JPEG, TIFF, or another suitable image format.

The method 300 may proceed to block 306, which may include directing the image of the webpage to a device for presentation of the image. The system may transmit the captured image over a network to the device. The device may include a display configured to present the image to a user. The image may be presented in a manner that allows the user to view the webpage as it would appear if rendered directly on the device.

The method 300 may continue to block 308, which may include after directing the image data to the webpage of the device, obtaining image interaction data from the device after directing the image to the device. The image interaction data may represent user interactions with the image of the webpage displayed on the device. The user interactions may include keystrokes, cursor location data, element selection events, and element interaction events. The device may capture these interactions and generate corresponding image interaction data for transmission to the system.

The method 300 may continue to block 310, which may include applying an interaction to the webpage that corresponds to the user interaction using the image interaction data in response to obtaining the image interaction data. The system may receive the image interaction data and translate the data into interactions that may be applied to the webpage via the web browser. The translation process may involve converting pixel locations in the image interaction data to corresponding positions on the rendered webpage. The web browser may then execute functions associated with the translated interactions.

It is understood that, for this and other processes, operations, and methods disclosed herein, the functions and/or operations performed may be implemented in differing order. Furthermore, the outlined functions and operations are only provided as examples, and some of the functions and operations may be optional, combined into fewer functions and operations, or expanded into additional functions and operations without detracting from the essence of the disclosed embodiments.

For example, the method 300 may further include obtaining a request to navigate to the webpage from the device prior to executing the webpage. The web browser on the system may execute the webpage in response to receiving this navigation request.

The translation of image interaction data to webpage interactions may be based on a correspondence between the presentation of the image and the capturing of the image. The system may maintain mapping information that correlates pixel positions in the captured image to corresponding elements and positions in the rendered webpage.

The method may include storing the interactions applied to the webpage. The stored interactions may be applied to the webpage in subsequent sessions without requiring the resending of images. Storing the interactions may allow for automated replay of user interaction sequences.

The method may further include capturing a second image of the webpage after applying the interaction. The method may including capturing updated images following each interaction to reflect changes in the webpage state. The subsequent images may be directed to the device for presentation, allowing the user to view the results of their interactions.

The method may involve obtaining second image interaction data representing additional user interactions with updated images. The system may apply second interactions to the webpage corresponding to these additional user interactions. Obtaining and applying second interactions may repeat iteratively to enable continuous user interaction with the remotely rendered webpage.

In some embodiments, applying the interaction to the webpage may result in the execution of a second webpage by the web browser. The system may capture and direct an image of the second webpage to the device for presentation. Capturing and directing an image of the second webpage to the device may enable navigation between different pages of a website through the remote browser control system.

In some embodiments, the image may be presented on the device via a presentation webpage executed by a second web browser on the device. The device may include a web browser application configured to display the received images and capture user interactions with those images.

The device may be configured to capture user interactions with the image and direct the interaction data to the system. The device may include input capture mechanisms configured to detect mouse movements, clicks, keyboard inputs, and other user interface events occurring in relation to the displayed image.

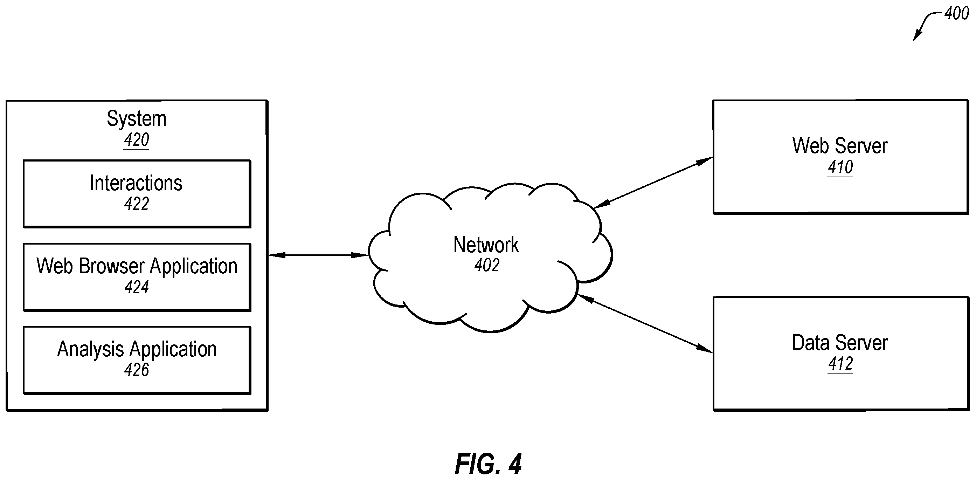

FIG. 4 illustrates an example environment 400 to monitor webpage security. The environment 400 may be arranged in accordance with at least one embodiment described in the present disclosure. The environment 400 may include a network 402, a webserver 410, a data server 412, and a system 420. The system 420 may include stored website interactions 422, a web browser application 424, and an analysis application 426.

In some embodiments, the network 402 may be configured to communicatively couple the webserver 410, the data server 412, and the system 420. In some embodiments, the network 402 and the webserver 410 may be analogous to the network 102 and the second webserver 112 of FIG. 1, respectively. Accordingly, no further explanation is provided with respect thereto.

The data server 412 may include at least memory and a processor. The memory may include instructions that when executed by the processor may cause or direct the data server 412 to perform operations as described in this disclosure, among other operations. The data server 412 may be configured to host remotely called code. In these and other embodiments, browser applications on devices, such as the browser application of the system 420, in response to parsing and/or execution of source code of webpage may send a request to a URL of the data server 412 to request the remotely called code. The data server 412 may fulfill the request by sending the remotely called code to the requesting device.

The system 420 may include at least memory and a processor. The memory may include instructions that when executed by the processor may cause or direct the system 420 to perform operations as described in this disclosure, among other operations. For example, the system 420 may be configured to monitor the security of webpages. Monitoring the security of webpages may include analyzing the webpages for indicators of compromise. In these and other embodiments, the monitoring of the security of webpages may include analyzing rendered code of a webpage. In some embodiments, monitoring the security of webpages may include analyzing webpages of a website that includes user data entry locations for indicators of compromise. In response to identification of a security issue, the system 420 may generate an alert.

In some embodiments, the alert may be configured to trigger one or more actions. For example, the alert may trigger the presentation of an indication of a security issue of the webpage. For example, an alert may be presented on the webpage. Alternately or additionally, an alert may be provided to one or more people and/or systems associated with the webpage. As another example, the system 420 may take corrective action to fix or reduce the security issue. For example, the system 420 may provide instructions to the webserver 410 to disable a portion or all the webpages with security issues.

In some embodiments, the system 420 may be configured to monitor the security of one or more specific webpages of a website. For example, the system 420 may be configured to monitor webpages that include user data entry locations to prevent the compromise of user data when entered in the user data entry locations. For example, a webpage with a user data entry location may be a check out page where a user enters a credit card number, a webpage where a user enters personal information such as a social security number or other personal or financial information, or a webpage where user credentials are entered such as a login page.

As noted previously, it may be insufficient to merely monitor the source code of a webpage due to how websites build and advance based on user interaction with the website and how remotely called code is requested and run.

In some embodiments, the system 420 may be configured to obtain all web traffic that occurs as a website builds and advances to a webpage of interest, such as a webpage with user data entry locations. The web traffic may be defined as all HTTP requests, web sockets, peer-to-peer protocols, JavaScript loads and runs, cookies accessed/written, among other functionality performed by a website. To obtain the web traffic, the webpages of the website may be rendered. In these and other embodiments, to render the webpages of the website may take navigating from a landing page and/or obtaining click events to cause the website to render the webpage of interest and obtain all web traffic.

In some embodiments, the system 420 may be configured to access a website to obtain the web traffic. In these and other embodiments, the web browser application 424 may be used to request source code of a landing webpage of a website from the webserver 410. The web browser application 424 may execute the source code and other remotely called code to begin rendering the landing webpage.

In some embodiments, the web browser application 424 may be configured to capture the web traffic that occurs when rendering webpages. For example, the web browser application 424 may include a headless browser automation tool, such as Puppetter for Chrome, which may be operational. In these and other embodiments, the system 420 may use the automation tool of the web browser application 424 to interface with the web browser application 424 to allow for interacting with webpages in ways similar as a user to enable capturing document object model (DOM) structures and web traffic of webpages of a website.

Using the automation tool, the website interactions 422 may be applied to webpages to allow for navigation through the webpages and the capture of the web traffic. In some embodiments, the website interactions 422 may be obtained from storage having previously been recorded. For example, the website interactions 422 may be previously stored by performing the operations described in FIGS 1 and 2. Alternately or additionally, the website interactions 422 may be obtained as a user interacts with the website.

As navigation occurs through a website via the website interactions 422, the web browser application 424 may output the DOM structure and the web traffic of the webpages that are rendered. In these and other embodiments, the analysis application 426 may be configured to obtain the DOM structure and web traffic for each of the webpages and to analyze the DOM structure and web traffic for indicators of compromise to identify security issues of the webpages.

To analyze webpages, the analysis application 426 may be configured to obtain a DOM structure for each webpage and web traffic that occurs for each webpage. In these and other embodiments, the analysis application 426 may record the DOM structure and web traffic that occurs between a landing webpage and a webpage of interest, referred to as a final webpage. In these and other embodiments, the analysis application 426 may record the DOM structure, navigational events, and web traffic for the landing webpage, the final webpage, and every webpage between the landing webpage and the final webpage. In these and other embodiments, the analysis application 426 may further document the origin of all the web traffic. For example, the analysis application 426 may include a record that indicates which webpage results and/or element on a webpage results in specific web traffic and if a certain click event or user interaction resulted in the specific web traffic. For example, the analysis application 426 may record what an inline frame of a certain webpage caused specific web traffic in response to a user interaction with the inline frame.

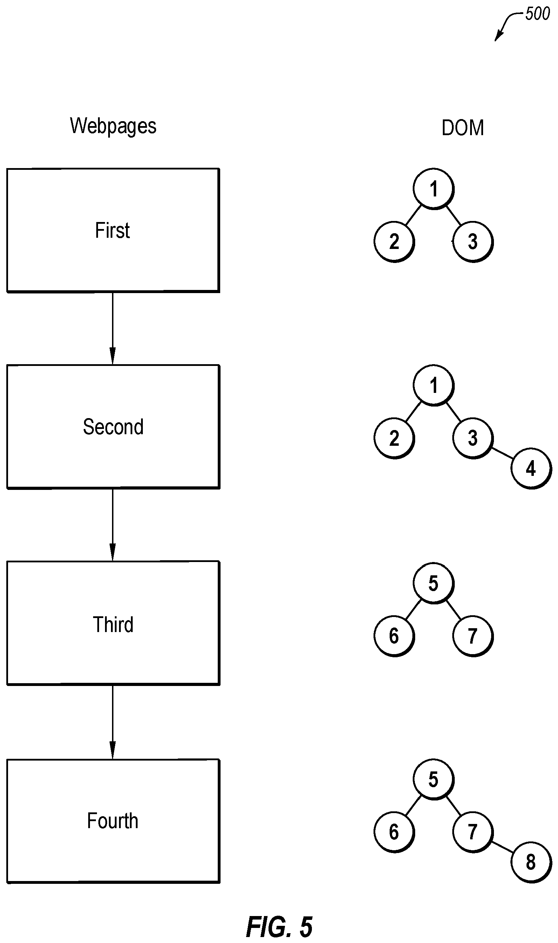

As an example, FIG. 5 illustrates webpage navigation 500. FIG. 5 illustrates webpages and a DOM associated with each webpage. In these and other embodiments, the first webpage may be a landing webpage and the fourth webpage may be a final webpage. The second and third webpages may be intermediate webpages. The navigation between the webpages of FIG. 5 may result from applying one or more website interactions 422 to the web browser application 424 as described with respect to FIG. 4 to cause navigation from the first webpage to the second webpage and so forth.

With respect to both FIGS. 4 and 5, the rendering of the first webpage may result in a first DOM. The analysis application 426 may be configured to record all web traffic that occurs by rendering the first webpage and/or one or more website interactions 422 occur with the first webpage. The analysis application 426 may further associate the web traffic that occurs as the first webpage is rendered as being associated with the first webpage and/or user interactions that resulted in the first webpage and/or dynamic changes in the first webpage.

In some embodiments, the analysis application 426 may further note navigation from the first webpage to the second webpage. The rendering of the second webpage may result in a continuation of the first DOM and additional elements being added to the DOM. The rendering of the second webpage may not restart the DOM. As a result, the analysis application 426 may record the navigation from the first webpage to the second webpage as a partial navigation event because the DOM did not reset with the navigation to the second webpage. The analysis application 426 may record the DOM of the second webpage and the web traffic that occurs as the second webpage is rendered and/or one or more website interactions 422 occur with the second webpage. The analysis application 426 may further associate the web traffic that occurs as the second webpage is rendered as being associated with the second webpage and/or user interactions that resulted in the second webpage and/or dynamic changes in the second webpage.

The application of one or more website interactions 422 to the second webpage may result in the navigation to the third webpage. The analysis application 426 may further note the navigation from the second webpage to the third webpage. The rendering of the third webpage may result in a new DOM. As a result, the analysis application 426 may record the navigation from the second webpage to the third webpage as a full navigation event because the DOM reset with the navigation to the third webpage. The analysis application 426 may record the DOM of the third webpage and the web traffic that occurs as the third webpage is rendered and/or one or more website interactions 422 occur with the third webpage. The analysis application 426 may further associate the web traffic that occurs as the third webpage is rendered as being associated with the third webpage and/or user interactions that resulted in the third webpage and/or dynamic changes in the third webpage.

The application of one or more website interactions 422 to the third webpage may result in the navigation to the fourth webpage. The analysis application 426 may further note the navigation from the third webpage to the fourth webpage. The rendering of the fourth webpage may not restart the DOM. As a result, the analysis application 426 may record the navigation from the third webpage to the fourth webpage as a partial navigation event The analysis application 426 may record the DOM of the fourth webpage and the web traffic that occurs as the fourth webpage is rendered and/or one or more website interactions 422 occur with the fourth webpage. The analysis application 426 may further associate the web traffic that occurs as the fourth webpage is rendered as being associated with the fourth webpage and/or user interactions that resulted in the fourth webpage and/or dynamic changes in the fourth webpage. The fourth webpage may include a user data entry location. The analysis application 426 may be configured to detect when data is entered into the user data entry location. For example, specific data may be entered into the user data entry location. As such, the analysis application 426 may identify the data and identify the user data entry location. Identifying the user data entry location may provide the analysis application 426 with information regarding the web traffic that interacts with the user data entry location and/or the passing of user data in the fourth webpage. Because a webpage is discovered in which the specific data is entered, further navigation may not occur, and the gathering of web traffic may end.

In some embodiments, the analysis application 426 may be further configured to analyze functions in the web traffic. For example, the analysis application 426 may overload the functions in the web traffic to determine the functionality of the functions, such as information about the data obtained, including from where and when, information about data output, including to where and when, and how the data is manipulated in the function. In these and other embodiments, the functions may be javascript or other functions.

An example of the navigation between is now provided, the website may be an e-commerce website, and the first webpage may be a homepage of the e-commerce website. The user may click on the "Electronics" category on the homepage and views the product listings which may result in navigation to the second webpage. On the second webpage, the user scrolls through the product listings, selects a specific item by clicking on it, which causes the navigation to the third webpage. A user may add the item to their cart, and then proceeds to the checkout page, which may be the navigation to the fourth webpage. The checkout page may include the user data entry locations, including a location to add credit card information.

With respect to FIG. 4, as described previously, the analysis application 426 may capture all the web traffic that occurs to render the fourth webpage, e.g., the webpage of interest. In some embodiments, the analysis application 426 may be configured to analyze all the web traffic that results between a landing page of the website and the webpage of interest. To analyze all the web traffic, the analysis application 426 may compare the current web traffic to previous or known web traffic. For example, before capturing current web traffic the analysis application 426 may have captured previous web traffic to render the webpage of interest. The previous web traffic may be used as known information to identify changes to the current web traffic and thereby identify indicators of compromise and identification of security issues. As an example, the previous web traffic may have been obtained before the request is sent to the webserver 410 to obtain the source code that resulted in rendering of the webpage of interest and the current web traffic. For example, the previous web traffic may be obtained and then used to compare to current web traffic that is generated days, weeks, or months after the previous web traffic is obtained.

In some embodiments, the analysis application 426 may be configured to compare the previous web traffic and the current web traffic to determine differences therebetween. In these and other embodiments, the differences may be analyzed to determine indicators of compromise and identify security issues. Any analysis may be used to determine the indicators of compromise. In some embodiments, any difference between the previous web traffic and the current web traffic may be an indicator of compromise. Alternately or additionally, only certain differences between the previous web traffic and the current web traffic may be an indicator of compromise.

For example, differences in web traffic that are unrelated to user data entry location, such as web traffic defining the size, color, or other layout aspects of the webpage of interest, may not result in an indicator compromise. For example, certain aspects of the webpage of interest may be altered based on a certain promotion or time of the year. For example, at Christmas certain elements of the webpage of interest may be different, such as a Merry Christmas logo on the checkout page. As a result, new web traffic may be used to cause the change. However, the web traffic to display the Merry Christmas logo being different from previous web traffic may not indicate that a scammer or bad actor is attempting to obtain user information from the webpage of interest. As such, the differences between the previous web traffic and the current web traffic may not result in an indicator of compromise.

As another example, differences in web traffic that are related to a user data entry location, such as web traffic defining what is passed into or out of fields that obtain user data may result in an indicator of compromise. An indicator of compromise may result in a security issue being identified and an alert being issued.

As another example, differences in web traffic, such as differences in origin or timing of certain web traffic, may result in an indicator of compromise. For example, certain web traffic may start in response to a first user interaction may have changed to start in response to a second user interaction may be an indicator of compromise. Alternately or additionally, certain web traffic originating with a first element of a webpage or a specific webpage and now originating at a different element or webpage may be an indicator of compromise.

As another example, the analysis application 426 may be configured to overload the functions in the current web traffic to determine the functionality of the functions. In these and other embodiments, the analysis application 426 may compare the functions of the current web traffic to the functions of the previous web traffic for differences and analyze the differences for indicators of compromise. For example, differences, such as additional locations for outputting data, may be an indicator of compromise.

In some embodiments, the analysis application 426 may be configured to sort the web traffic that results between a landing page of the website and the webpage of interest. In these and other embodiments, the analysis application 426 may select web traffic for analysis. The analysis application 426 may select the web traffic for analysis based on a previous full navigation before the webpage of interest. For example, the analysis application 426 may determine the last full navigation event that occurred before rendering of the webpage of interest. In these and other embodiments, all the web traffic between the last full navigation event and the rendering of the webpage of interest may be analyzed. In this and other embodiments, the analysis of the web traffic may include any known analysis related to webpage security to determine indicator of compromise. For example, the selected web traffic may be compared to the previous web traffic that was selected as previously described. Alternately or additionally, functionality of the functions in the selected web traffic may be analyzed as previously described.

For example, with respect to FIG. 5, a full navigation event occurred between navigating from the second webpage to the third webpage where the DOM completely reset. In this example, the web traffic to be analyzed would be all the web traffic in the DOM for rendering the third web page and the fourth web page. By capturing all the web traffic in the DOM since a full navigation event, all web traffic, such as JavaScript, that may affect a webpage of interest may be inspected and the origins of the JavaScript may be known to assist in the indicators of compromise analysis.

Returning to FIG. 4, in some embodiments, the analysis application 426 may be further configured to identify a configuration used for the user data entry location of webpage. For example, the user data entry locations may be included in a hosted portion of the webpage, included in an inline frame of the webpage, or may be a redirect to another webpage. In some embodiments, the hosted portion of the webpage may include a stand-alone entity that operates autonomously, serving content and functionality based on design and purpose of the webpage. In the hosted portion, the user data may be captured by the hosted portion of the webpage.

An inline frame of the webpage may include an HTML element embedded within the webpage that allows a separate webpage or web resource to be displayed within the webpage. The inline frame may load a separate hosted webpage or content from a different source but may be viewed and interacted with within the context of the webpage, effectively embedding an external webpage inside the webpage. In the inline frame, the user data may be captured in the inline frame and not within a hosted portion of the webpage. A redirect may include automatically rerouting from one URL to another. The redirection may occur without manual navigation or intervention. In the redirect, the user data may be captured on the redirected page and not within a hosted portion of the webpage.

In some embodiments, the analysis application 426 may identify the configuration used for the user data entry location based on the analysis of the rendering of the webpage. For example, the analysis application 426 may identify that user data is merely passed to a new webpage unassociated with the current webpage via a redirect, that the user data is passed to an inline frame, or the user data is used by a hosted portion of the webpage. Alternately or additionally, the analysis application 426 may obtain input from a user regarding the configuration used for the user data entry location.

In some embodiments, the analysis application 426 may be configured to perform a different analysis depending on the configuration used for the user data entry location. For example, each of the different configurations may be associated with a different analysis to be performed to identify security issues of the webpage. In these and other embodiments, the analysis application 426 may identify the configuration used for the user data entry location and may select the corresponding analysis based on the identified configuration. In these and other embodiments, each of the analyses for the different configurations may be different.

In some embodiments, the analysis application 426 may only perform the analysis on the webpage based on the configuration used for the user data entry location. For example, in response to the webpage using a first configuration, the analysis application 426 may perform only the analysis associated with the first configuration and may not perform other analysis that may be performed with respect to other configurations or other analysis that may be performed to identify security issues. Alternately or additionally, the analysis application 426 may perform an analysis associated with the configuration used for the user data entry location but may also perform other analysis based on the webpage and web traffic.

In some embodiments, for hosted configuration, the analysis application 426 may be configured to perform a full analysis of the web traffic of the webpage. For example, the analysis application 426 may perform an analysis for all web traffic from a landing webpage to the webpage or may perform an analysis for a selection of the web traffic from a last full navigation event to the webpage. In these and other embodiments, the analysis application 426 may perform comparison between previous and current web traffic, comparisons of function functionality, among other analysis techniques.

In some embodiments, for redirect configuration, the analysis application 426 may be configured to validate that the redirect sent the user to a correct destination. For example, the analysis application 426 may have a record of a previous destination associated with the redirect. In these and other embodiments, the analysis application 426 may compare the previous destination with a current destination associated with the redirect. If the destinations are not the same, a security issue may be identified. Note that in a redirect, the owner of the webpage that is redirecting may only have a responsibility to ensure that website is correctly handling user data. As user data is only entered via the redirected webpage, as long as the user is directed to the correct website, the owner of the webpage may have fulfilled their responsibility.

In some embodiments, for inline frame configuration, the analysis application 426 may be configured to analyze an integrity of the inline frame, analyzing changes to the inline frame resulting from execution of code from the webpage, and analyzing other inline frames on the webpage for changes.

In some embodiments, an analysis of the integrity of the inline frame may include determining whether the operation of the inline frame has remained static and/or changes to the source URL for the inline frame. For example, previous operations of the inline frame may be detected and compared to current operations of the inline frame. A difference between the operations may indicate the integrity of the inline is compromised and there is a security issue. The operations of the inline frame may include navigation of the inline frame to a website, how the inline frame accepts user data,

In some embodiments, to analyze changes to the inline frame resulting from execution of code from the webpage, the analysis application 426 may be configured to determine web traffic, such as JavaScripts or other scripts, that may interact with the inline frame and determine if the web traffic is interacting with the inline frame in a new manner. For example, the analysis application 426 may compare previous interactions of the web traffic with the inline frame to current interactions to determine a security issue.

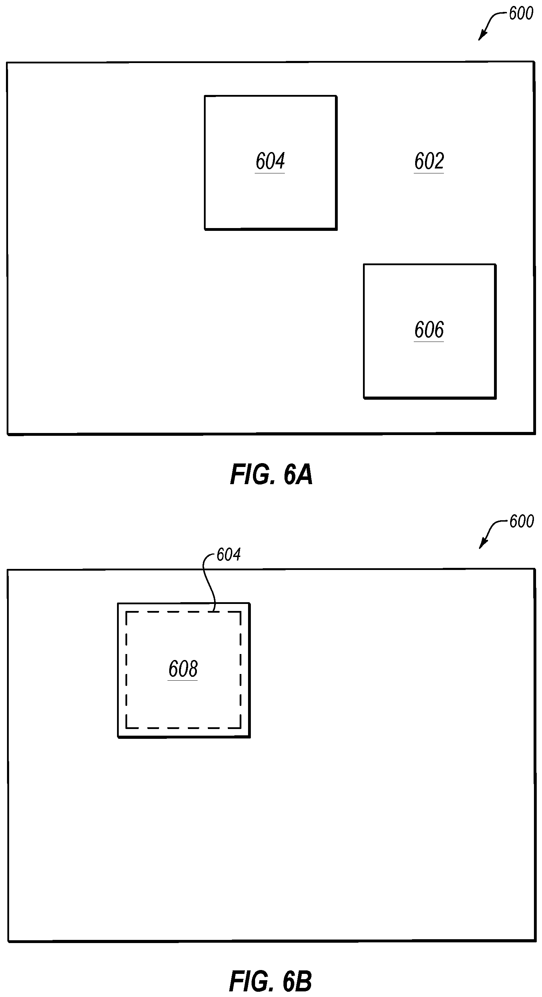

In some embodiments, the analysis application 426 may be configured to analyze other inline frames on the webpage for changes. An example of a webpage with inline frames is illustrated FIGS. 6A and 6B. Specifically, FIGS. 6A and 6B illustrates a webpage 600 with a first frame 604 and a second frame 606 embedded in the webpage 600 and interacting with a hosted portion 602 of the webpage 600. The first frame 604 may be configured to obtain user data. FIG. 6A illustrates each of the first and second frames 604 and 606 having unique positions that do not overlap in the webpage. FIG. 6B illustrates that the second inline frame 606 has been removed and a third inline frame 608 has been moved to cover at least a portion of the first frame 604. The third frame 608 covering the first frame 604 may cause a user to input user data into the third frame 608 instead of the first frame 604. In these and other embodiments, the analysis application 426 may be configured to analyze the other inline frames on the second webpage to detect this and other changes.

For example, the analysis application 426 may be configured to record the location and functionality of inline frames in the webpage and in the webpages used to navigate to the webpage. In these and other embodiments, the analysis application 426 may determine when a location and/or functionality of an inline frame in the webpage changes. The analysis application 426 may further determine whether the change may result in a security issue based on the change. For example, changes to an inline frame that result in a location of the inline frames at least partially covering the inline frame that accepts user input may be determined to be a security issue. For example, as illustrated in FIG. 6B, the positioning of the third frame 608 over the first frame 604 may be a security issue. Alternately or additionally, changes to an inline frame that changes or affects the functionality of the inline frame that accepts user input may be determined to be a security issue. However, all changes to inline frames may not be a security issue. For example, removal or addition of an inline frame that does not affect or cover the inline frame accepting user input may not be a security issue. For example, the remove of the second frame 606 in FIG. 6B may not be a security issue.

Modifications, additions, or omissions may be made to the environment 400 without departing from the scope of the present disclosure. For example, in some embodiments, the environment 400 may include any number of other components that may not be explicitly illustrated or described.

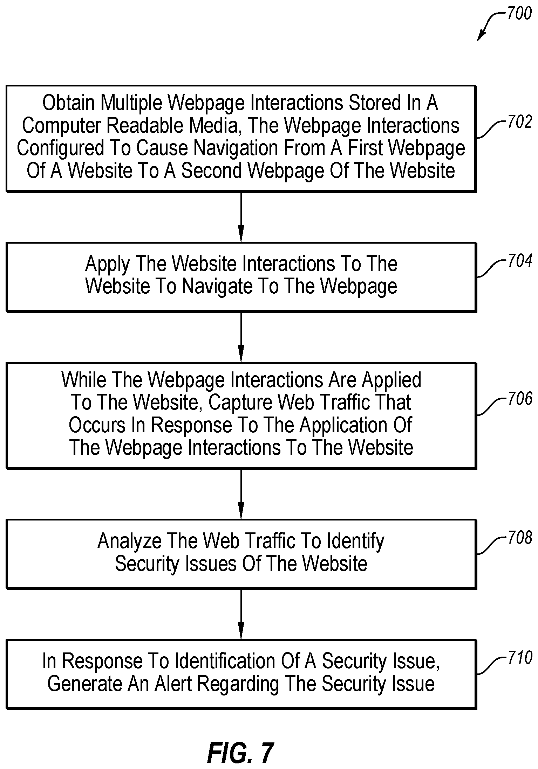

FIG. 7 illustrates a flow chart of an example method 700 of webpage analysis. The flow chart may be arranged in accordance with at least one embodiment described in the present disclosure. The method 700 may be performed by a system, such as the system 420 of FIG. 4, or another device or combination of devices/systems. Although illustrated as discrete blocks, various blocks may be divided into additional blocks, combined into fewer blocks, or eliminated, depending on the desired implementation.

The method 700 may begin with block 702, which may include obtaining multiple webpage interactions stored in a computer readable media. The webpage interactions may be configured to cause navigation from a first webpage of a website to a second webpage of the website. In some embodiments, the first webpage may be a landing webpage that is accessible without previous interaction with the website. In these and other embodiments, the second webpage may include a user data entry location that allows for entry of personal or financial information of the user. In some embodiments, each of the plurality of webpage interactions may be a user interaction that is obtained using the methods described with respect to FIGS. 1 through 3. Before obtaining the webpage interactions stored in the computer readable media, the webpage interactions may be captured and stored in the computer readable media.

The method 700 may proceed to block 704, which may include applying, via a web browser, the webpage interactions to the website. The web browser may be configured to process the webpage interactions and execute corresponding functions on the website. The application of the webpage interactions may cause navigation from the first webpage to the second webpage through any intermediate webpages.

The method 700 may continue to block 706, which may include capturing web traffic that occurs in response to the application of the webpage interactions to the website while the webpage interactions are applied to the website. The web traffic may include all HTTP requests, web sockets, peer-to-peer protocols, JavaScript loads and executions, cookies accessed or written, and other functionality performed by the website. The web traffic may be captured for each webpage encountered during the navigation process.

The method 700 may proceed to block 708, which may include analyzing the web traffic to identify security issues of the website. The analyzing of the web traffic may include determining which of the web traffic occurred between a previous full navigation event and the rendering of the second webpage. The web traffic that occurs between the previous full navigation event and the rendering of the second webpage may be selected as the web traffic to be analyzed. In these and other embodiments, the previous full navigation event results in a reset of the document object model of the webpage. The web traffic that is not selected may not be analyzed. The web traffic may include partial navigation events that occur between the previous full navigation event and the navigation to the second webpage.

The method 700 may continue to block 710, which may include generating an alert regarding the security issue in response to identification of a security issue. The alert may be configured to trigger presentation of an indication of the security issue or provide notification to people or systems associated with the webpage.

The method 700 may include alternative implementations where the webpage interactions are captured and stored before being obtained from the computer readable media. The method may involve analyzing functions within the web traffic to determine their functionality and comparing current web traffic to previous or known web traffic to identify differences that may indicate security issues.

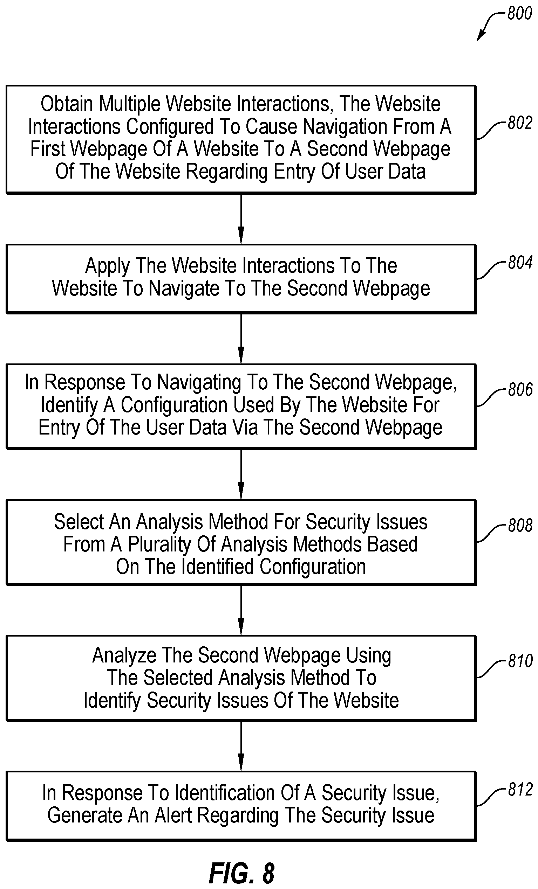

FIG. 8 illustrates a flow chart of another example method of webpage analysis. The flow chart may be arranged in accordance with at least one embodiment described in the present disclosure. The method may be performed by a system, such as the system 420 of FIG. 4, or another device or combination of devices/systems. Although illustrated as discrete blocks, various blocks may be divided into additional blocks, combined into fewer blocks, or eliminated, depending on the desired implementation.

The method 800 may begin with block 802, which may include obtaining multiple website interactions. The website interactions may be configured to cause navigation from a first webpage of a website to a second webpage of the website regarding entry of user data. The website interactions may be stored in computer readable media and may be retrieved for application to the website. The website interactions may include user interface events such as clicks, keystrokes, cursor movements, and other user interactions that were previously captured and recorded.

The method 800 may proceed to block 804, which may include applying the website interactions to the website to navigate to the second webpage. The website interactions may be applied via a web browser application that may be configured to process and execute the interactions. The application of the website interactions may cause sequential navigation through one or more webpages of the website until reaching the second webpage that contains user data entry functionality.

The method 800 may continue to block 806, which may include identifying a configuration used by the website for entry of the user data via the second webpage in response to navigating to the second webpage. The configuration may be one of directly hosted by the second webpage, an inline frame embedded in the second webpage, or a redirect to another webpage. The identification process may involve analyzing the document object model structure and web traffic patterns associated with the user data entry location. The system may examine how user data flows through the webpage to determine the specific configuration being utilized.

The method 800 may proceed to block 808, which may include selecting an analysis method for security issues from multiple analysis methods based on the identified configuration. Each of the plurality of analysis methods may correspond to one of the configurations of the entry of the user data. Each of the plurality of analysis methods may be different and may be specifically tailored to address security concerns associated with the particular configuration type.

The method 800 may continue to block 810, which may include analyzing the second webpage using the selected analysis method to identify security issues of the website. The analysis method for the configuration of the entry of the user data being directly hosted may include analyzing functions that accept user data for anomalies. The analysis method for the configuration of the entry of the user data being the inline frame may include analyzing that the inline frame has remained static, analyzing changes to the inline frame resulting from execution of code from the second webpage, and analyzing other inline frames on the second webpage for changes. The analysis method for the configuration of the entry of the user data being redirected may include analyzing the redirect for changes to a landing page of the redirect. The analysis method for the configuration of the entry of the user data being redirected may include only analyzing the redirect for changes to a landing page of the redirect.

The method 800 may continue to block 812, which may include generating an alert regarding the security issue in response to identification of a security issue. The alert may be configured to trigger presentation of an indication of the security issue or provide notification to people or systems associated with the webpage. The alert may initiate corrective actions to address the identified security concerns.

The method may include alternative implementations where each of the plurality of webpage interactions may be a user interaction that is obtained using the methods described with respect to FIGS. 1 through 3. The analyzing of the second webpage using the selected analysis method may include capturing web traffic that occur in response to the application of the plurality of webpage interactions to the website and analyzing one or more of the web traffic to identify the security issues using the methods described with respect to FIG. 7.

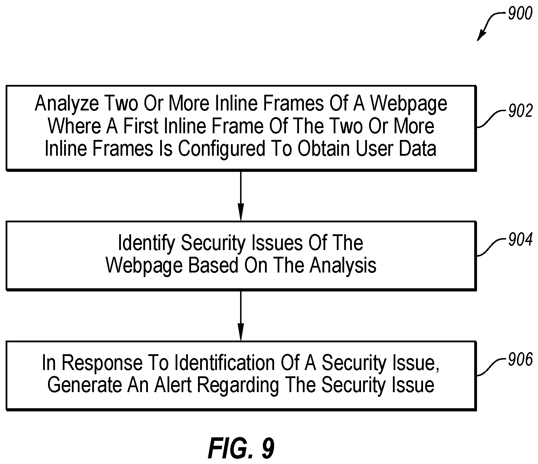

FIG. 9 illustrates a flow chart of an example method 900 of webpage analysis based on analyzing multiple inline frames. The flow chart may be arranged in accordance with at least one embodiment described in the present disclosure. The method 900 may be performed by a system, such as the system 420 of FIG. 4, or another device or combination of devices/systems. Although illustrated as discrete blocks, various blocks may be divided into additional blocks, combined into fewer blocks, or eliminated, depending on the desired implementation.

The method 900 may begin with block 902, which may include analyzing two or more inline frames of a webpage where a first inline frame of the two or more inline frames is configured to obtain user data. The analyzing of the two or more inline frames may include examining the structure, positioning, functionality, and behavior of each inline frame within the webpage. The first inline frame may be designated as the primary data collection element configured to receive personal or financial information from users. The analysis may involve monitoring the static properties of the first inline frame to ensure the first inline frame has remained unchanged from its expected configuration. The analysis may further include examining changes to the first inline frame that may result from execution of code from the webpage where such changes may indicate potential security compromises. Additionally, the analysis may encompass examining other inline frames on the webpage for modifications, repositioning, or behavioral changes that may affect the security of the user data entry process.

The method 900 may proceed to block 904, which may include identifying security issues of the webpage based on the analysis. The identification process may involve detecting anomalies in the inline frame configurations, unexpected changes in frame positioning, or alterations in frame functionality that may compromise user data security. Security issues may be identified when inline frames are repositioned to overlay or obscure the primary data entry frame, when new inline frames are introduced that may intercept user data, or when existing frames exhibit modified behavior patterns.

The method 900 may continue to block 906, which may include generating an alert regarding the security issue in response to identification of a security issue. The alert may be configured to notify relevant stakeholders about the detected security concerns and may trigger appropriate remediation actions. The alert may include detailed information about the nature of the security issue and the specific inline frames involved in the compromise.

As an alternative implementation of the method 900, the analyzing of the two or more inline frames may be performed in conjunction with obtaining a plurality of website interactions that are configured to cause navigation from a first webpage of a website to a second webpage of the website regarding entry of user data. Each of the plurality of webpage interactions may be a user interaction that is obtained using the methods described with respect to FIGS 1 and 2. The method may further include applying, via a web browser, the plurality of webpage interactions to the website to navigate to the webpage containing the inline frames. While the plurality of webpage interactions are applied to the website, web traffic that occurs in response to the application of the plurality of webpage interactions to the website may be captured. In this alternative implementation, the analyzing of the two or more inline frames may include analyzing web traffic associated with the two or more inline frames, wherein the web traffic analysis may be performed using the methods described with respect to FIGS 4-7.

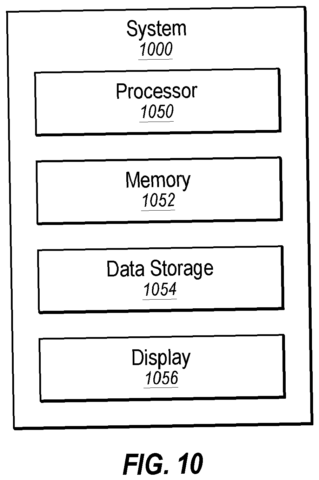

FIG. 10 illustrates a block diagram of an example computing system 1000. The computing system 1000 may be configured according to at least one embodiment of the present disclosure and may be configured to perform one or more operations related to monitoring the integrity of webpages. The computing system 1000 may include a processor 1050, a memory 1052, a data storage 1054, and a display 1056. The processor 1050, the memory 1052, the data storage 1054, and the display 1056 may be communicatively coupled.

In general, the processor 1050 may include any suitable special-purpose or general-purpose computer, computing entity, or processing device including various computer hardware or software modules and may be configured to execute instructions stored on any applicable computer-readable storage media. For example, the processor 1050 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 10, the processor 1050 may include any number of processors configured to, individually or collectively, perform or direct performance of any number of operations described in the present disclosure. Additionally, one or more of the processors may be present on one or more different electronic devices, such as different servers.

In some embodiments, the processor 1050 may be configured to interpret and/or execute program instructions and/or process data stored in the memory 1052, the data storage 1054, or the memory 1052 and the data storage 1054. In some embodiments, the processor 1050 may fetch program instructions from the data storage 1054 and load the program instructions in the memory 1052. After the program instructions are loaded into memory 1052, the processor 1050 may execute the program instructions.

For example, the computing system 1000 may be part of the device 120 or the device 220. In these and other embodiments, the computing system 1000 may be configured to obtain and display images on the display 1056, obtain image interaction data, and perform other operations.

As another example, the computing system 1000 may be part of the system 130, the system 230, or the system 420. In these and other embodiments, the computing system 1000 may be configured to generate images, rendering webpages, and handle image interaction data, among other operations.

The memory 1052 and the data storage 1054 may include computer-readable storage media for carrying or having computer-executable instructions or data structures stored thereon. Such computer-readable storage media may include any available media that may be accessed by a general-purpose or special-purpose computer, such as the processor 1050. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (*e.g.,* solid state memory devices), or any other storage medium which may be used to carry or store particular program code in the form of computer-executable instructions or data structures and which may be accessed by a general-purpose or special-purpose computer. In these and other embodiments, the term "non-transitory" as explained in the present disclosure should be construed to exclude only those types of transitory media that were found to fall outside the scope of patentable subject matter in the Federal Circuit decision of *In re Nuijten,* 500 F.3d 1346 (Fed. Cir. 2007). Combinations of the above may also be included within the scope of computer-readable media.

Modifications, additions, or omissions may be made to the computing system 1000 without departing from the scope of the present disclosure. For example, in some embodiments, the computing system 1000 may include any number of other components that may not be explicitly illustrated or described.

As indicated above, the embodiments described herein may include the use of a special purpose or general-purpose computer (e.g., the processor 1050 of FIG. 10) including various computer hardware or software modules, as discussed in greater detail below. Further, as indicated above, embodiments described herein may be implemented using computer-readable media (e.g., the memory 1052 of FIG. 10) for carrying or having computer-executable instructions or data structures stored thereon.

In some embodiments, the different components, modules, engines, and services described herein may be implemented as objects or processes that execute on a computing system (e.g., as separate threads). While some of the systems and methods described herein are generally described as being implemented in software (stored on and/or executed by general purpose hardware), specific hardware implementations or a combination of software and specific hardware implementations are also possible and contemplated.

In accordance with common practice, the various features illustrated in the drawings may not be drawn to scale. The illustrations presented in the present disclosure are not meant to be actual views of any particular apparatus (e.g., device, system, etc.) or method, but are merely idealized representations that are employed to describe various embodiments of the disclosure. Accordingly, the dimensions of the various features may be arbitrarily expanded or reduced for clarity. In addition, some of the drawings may be simplified for clarity. Thus, the drawings may not depict all the components of a given apparatus (e.g., device) or all operations of a particular method.

Terms used herein and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, it is understood that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

Additionally, the use of the terms "first," "second," "third," etc., are not necessarily used herein to connote a specific order or number of elements. Generally, the terms "first," "second," "third," etc., are used to distinguish between different elements as generic identifiers. Absence a showing that the terms "first," "second," "third," etc., connote a specific order, these terms should not be understood to connote a specific order. Furthermore, absence a showing that the terms first," "second," "third," etc., connote a specific number of elements, these terms should not be understood to connote a specific number of elements. For example, a first widget may be described as having a first side and a second widget may be described as having a second side. The use of the term "second side" with respect to the second widget may be to distinguish such side of the second widget from the "first side" of the first widget and not to connote that the second widget has two sides.

All examples and conditional language recited herein are intended for pedagogical objects to aid the reader in understanding the invention and the concepts contributed by the inventor to furthering the art, and are to be construed as being without limitation to such specifically recited examples and conditions. Although embodiments of the present disclosure have been described in detail, it should be understood that the various changes, substitutions, and alterations could be made hereto without departing from the spirit and scope of the present disclosure.

The subject technology of the present disclosure is illustrated, for example, according to various aspects described below. Various examples of aspects of the present disclosure are described as numbered examples (1, 2, 3, etc.) for convenience. These are provided as examples and do not limit the present disclosure. The aspects of the various implementations described herein may be omitted, substituted for aspects of other implementations, or combined with aspects of other implementations unless context dictates otherwise. For example, one or more aspects of example 1 below may be omitted, substituted for one or more aspects of another example (e.g., example 2) or examples, or combined with aspects of another example. The following is a non-limiting summary of some example implementations presented herein.

Example 1. A method to control a remote browser, the method comprising: executing a webpage by a web browser on a system; capturing, by the system, an image of the webpage; directing the image of the webpage to a device for presentation of the image; after directing the image of the webpage to the device, obtaining, at the system, image interaction data from the device, the image interaction data representing a user interaction with the image of the webpage; and in response to obtaining the image interaction data, applying, at the system via the web browser, an interaction to the webpage that corresponds to the user interaction using the image interaction data.

Example 2. The method of example 1, further comprising obtaining, at the system from the device, a request to navigate to the webpage, wherein the web browser on the system executes the webpage in response to the request to navigate to the webpage.

Example 3.The method of any proceeding example, wherein applying the user interaction to the webpage via the web browser includes translating the image interaction data to the interaction based on a correspondence between the presentation of the image of the webpage and the capturing of the image of the webpage.

Example 4.The method of example 3, further comprising storing the interaction; and applying the stored interaction to the webpage without resending the image of the webpage.

Example 5. The method of any proceeding example, further comprising: capturing a second image of the webpage after applying the interaction to the webpage; directing the second image of the webpage to a device for presentation of the image; obtaining second image interaction data from the device, the second image interaction data representing a second user interaction with the second image; and applying a second interaction to the webpage that corresponds to the second user interaction using the second image interaction data.

Example 6. The method of any proceeding example, further comprising: in response to applying the interaction to the webpage, executing a second webpage by the web browser; and directing a second image of the second webpage to the device for presentation of the second image.

Example 7. The method of any proceeding example, wherein the image interaction data includes one or more of: key strokes, cursor location, element selection, and element interaction.

Example 8. The method of any proceeding example, wherein the image is presented on the device via a presentation webpage executed by a second web browser on the device.

Example 9. The method of any proceeding example, wherein the device captures the user interaction with the image and directs the interaction to the system.

Example 10. One or more non-transitory computer readable media configured to store instructions that when executed by the system to perform any combination of examples 1-9.

Example 11. A system comprising: one or more computer readable media configured to store instructions; and one or more processors coupled to the computer readable media and configured to execute the instructions to cause or direct the system to perform any combination of examples 1-9.

Example 12. A method of webpage analysis, the method comprising: obtaining a plurality of webpage interactions stored in a computer readable media, the plurality of webpage interactions configured to cause navigation from a first webpage of a website to a second webpage of the website; applying, via a web browser, the plurality of webpage interactions to the website; while the plurality of webpage interactions are applied to the website, capturing web traffic that occurs in response to the application of the plurality of webpage interactions to the website; analyzing the web traffic to identify security issues of the website; and in response to identification of a security issue, generating an alert regarding the security issue.

Example 13. The method of example 12, further comprising: before obtaining the plurality of webpage interactions stored in the computer readable media, capturing the plurality of webpage interactions; and storing the plurality of user interactions in the computer readable media.

Example 14. The method of any of examples 12 and 13, wherein the landing webpage is a webpage accessible without previous interaction with the website.

Example 15. The method of any of examples 12-14, wherein analyzing the one or more of the web traffic includes: determining which of the web traffic occurred between a previous full navigation event and the rendering of the second webpage; and selecting the web traffic that occur between the previous full navigation event and the rendering of the second webpage as the web traffic to be analyzed.

Example 16. The method of example 15, wherein the web traffic that are not selected are not analyzed.

Example 17. The method of any of examples 15 and 16, wherein the previous full navigation event results in a reset of the document object model of the webpage.

Example 18. The method of any of examples 15 through 17, wherein the web traffic include partial navigation events that occur between the previous full navigation event second webpage and the navigation to the second webpage.

Example 19. The method of any of examples 12 through 18, wherein the first webpage is a landing webpage and the second webpage includes a user data entry location.

Example 20. The method any of example 19, wherein the user data entry location allows for entry of personal or financial information of the user.

Example 21. The method of any of examples 12 through 20, wherein each of the plurality of webpage interactions is a user interaction that is obtained using any combination of the methods of examples 1-9.

Example 22. One or more non-transitory computer readable media configured to store instructions that when executed by the system to perform any combination of examples 12-21.

Example 23. A system comprising: one or more computer readable media configured to store instructions; one or more processors coupled to the computer readable media and configured to execute the instructions to cause or direct the system to perform any combination of examples 12-21.

Example 24. A method of webpage analysis, the method comprising: obtaining a plurality of website interactions, the plurality of website interactions configured to cause navigation from a first webpage of a website to a second webpage of the website regarding entry of user data; applying the plurality of website interactions to the website to navigate to the second webpage; in response to navigating to the second webpage, identifying a configuration used by the website for entry of the user data via the second webpage; selecting an analysis method for security issues from a plurality of analysis methods based on the identified configuration; analyzing the second webpage using the selected analysis method to identify security issues of the website; and in response to identification of a security issue, generating an alert regarding the security issue.

Example 25. The method of example 24, wherein the configuration of the entry of the user data is one of directly hosted by the second webpage, an inline frame embedded in the second webpage, and a redirect to another webpage.

Example 26. The method of examples 24 and 25, wherein each of the plurality of analysis methods corresponds to one of the configurations of the entry of the user data and each of the of the plurality of analysis methods is different.

Example 27. The method of examples 25 and 26, wherein the analysis method for the configuration of the entry of the user data being directly hosted includes analyzing functions that accept user data for anomalies.

Example 28. The method of examples 25-27, wherein the analysis method for the configuration of the entry of the user data being the inline frame includes analyzing that the inline frame has remained static, analyzing changes to the inline frame resulting from execution of code from the second webpage, and analyzing other inline frames on the second webpage for changes.

Example 29. The method of examples 25-28, wherein the analysis method for the configuration of the entry of the user data being redirected includes analyzing the redirect for changes to a landing page of the redirect.

Example 30. The method of example 29, wherein the analysis method for the configuration of the entry of the user data being redirected includes only analyzing the redirect for changes to a landing page of the redirect.

Example 31. The method of examples 24-30, wherein each of the plurality of webpage interactions is a user interaction that is obtained using any combination of the methods of examples 1-9.

Example 32, The method of examples 24-31, wherein analyzing the second webpage using the selected analysis method includes: capturing web traffic that occur in response to the application of the plurality of webpage interactions to the website; and analyzing one or more of the web traffic to identify the security issues using any combination of the methods of examples 13-20.

Example 33. One or more non-transitory computer readable media configured to store instructions that when executed by the system to perform any combination of examples 24-32.

Example 34. A system comprising: one or more computer readable media configured to store instructions; and one or more processors coupled to the computer readable media and configured to execute the instructions to cause or direct the system to perform any combination of examples 24-32.

Example 35. A method of webpage analysis, the method comprising:
analyzing two or more inline frames of a webpage where a first inline frame of the two or more inline frames is configured to obtain user data; identifying security issues of the webpage based on the analysis; and in response to identification of a security issue, generating an alert regarding the security issue.

Example 36. The method of example 35, wherein the analyzing the two or more inline frames includes analyzing that the first inline frame has remained static, analyzing changes to the first inline frame resulting from execution of code from the second webpage, and analyzing other inline frames for changes.

Example 37. The method of example 36, further comprising: obtaining a plurality of website interactions, the plurality of website interactions configured to cause navigation from a first webpage of a website to a second webpage of the website regarding entry of user data, wherein each of the plurality of webpage interactions is a user interaction that is obtained using any combination of the methods of examples 1-9; applying, via a web browser, the plurality of webpage interactions to the website; and while the plurality of webpage interactions are applied to the website, capturing web traffic that occurs in response to the application of the plurality of webpage interactions to the website, wherein the analyzing the two or more inline frames includes analyzing web traffic associated with the two or more inline frames.

Example 38. The method of examples 37, wherein the analyzing the web traffic is performed using any combination of the methods of examples 13-20.

Example 39. One or more non-transitory computer readable media configured to store instructions that when executed by the system to perform any combination of examples 35-38.

Example 40. A system comprising: one or more computer readable media configured to store instructions; and one or more processors coupled to the computer readable media and configured to execute the instructions to cause or direct the system to perform any combination of examples 35-38.

## Claims

1. A method of webpage analysis, the method comprising:
obtaining a plurality of webpage interactions stored in a computer readable media, the plurality of webpage interactions configured to cause navigation from a first webpage of a website to a second webpage of the website;
applying, via a web browser, the plurality of webpage interactions to the website;
while the plurality of webpage interactions are applied to the website, capturing web traffic that occurs in response to the application of the plurality of webpage interactions to the website;
analyzing the web traffic to identify security issues of the website; and
in response to identification of a security issue, generating an alert regarding the security issue.

2. The method of claim 1, further comprising:
before obtaining the plurality of webpage interactions stored in the computer readable media, capturing the plurality of webpage interactions; and
storing the plurality of webpage interactions in the computer readable media.

3. The method of any proceeding claim, wherein analyzing the one or more of the web traffic includes:
determining which of the web traffic occurred between a previous full navigation event and a rendering of the second webpage; and
selecting the web traffic that occurs between the previous full navigation event and the rendering of the second webpage as the web traffic to be analyzed.

4. The method of claim 3, wherein the web traffic that is not selected is not analyzed.

5. The method of any of claims 3 and 4, wherein the previous full navigation event results in a reset of a document object model of the webpage.

6. The method of any of claims 3 through 5, wherein the web traffic includes partial navigation events that occur between the previous full navigation event to the second webpage and the navigation to the second webpage.

7. The method of any proceeding claim, wherein the first webpage is a landing webpage and the second webpage includes a user data entry location.

8. The method of any proceeding claim, further comprising:
in response to navigating to the second webpage, identifying a configuration used by the website for entry of user data via the second webpage;
selecting an analysis method for security issues from a plurality of analysis methods based on the identified configuration; and
analyzing the second webpage using the selected analysis method to identify security issues of the website.

9. The method of claim 8, wherein the analyzing the second webpage includes:
analyzing an inline frame of the second webpage that is configured to obtain user data, including changes to the inline frame resulting from execution of code from the second webpage; and
analyzing other inline frames on the second webpage for changes.

10. The method of any proceeding claims, wherein before obtaining the plurality of webpage interactions, the method includes:
executing the first webpage by a second web browser on a system;
capturing, by the system, an image of the first webpage;
directing the image of the first webpage to a device for presentation of the image; and
after directing the image of the first webpage to the device, obtaining image interaction data from the device, the image interaction data representing a user interaction with the image of the first webpage, wherein one of the plurality of webpage interactions is based on the image interaction data.

11. The method of claim 10, wherein before obtaining the plurality of webpage interactions, the method includes in response to obtaining the image interaction data, applying, at the system via the second web browser, an interaction to the first webpage that corresponds to the user interaction using the image interaction data.

12. The method of claim 11, wherein the applying the interaction to the webpage via the second web browser includes translating the image interaction data to the interaction based on a correspondence between the presentation of the image of the webpage and the capturing of the image of the webpage.

13. The method of any of claims 10-12, wherein the image interaction data includes one or more of: key strokes, cursor location, element selection, and element interaction.

14. One or more non-transitory computer readable media configured to store instructions that when executed perform any combination of claims 1-13.

15. A system comprising:
one or more computer readable media configured to store instructions; and
one or more processors coupled to the computer readable media and configured to execute the instructions to cause or direct the system to perform any combination of claims 1-13.
